# EUROPEAN PATENT APPLICATION

(11) **EP 4 796 814 A1**
(43) Date of publication of application: **26.08.2026**
(21) Application number: 26159259.6
(22) Date of filing: 18.02.2026
(51) Int. Cl.: F16H 63/04, F16H 63/30

(54) **ENGAGEMENT DEVICE FOR MECHANICAL GEARBOX**

(30) Priority: 21.02.2025 IT 202500003438
(71) Applicant: Active S.r.l., 26037 San Giovanni in Croce (Cremona) (IT)
(72) Inventor: BUOLI, Giorgio, SAN GIOVANNI IN CROCE (CR) (IT); GRIFFINI, Alberto, SAN GIOVANNI IN CROCE (CR) (IT)
(74) Representative: Robba, Pierpaolo

(57) **Abstract**

The present invention relates to an engagement device for mechanical gearbox (10; 10') comprising an actuating means, suitable to drive the rotation of a drive shaft (11) around a rotation axis (R) to couple a first gear (1) to a second gear, a first lever (17) rotating independently of said drive shaft (11), and a second lever (19; 19') integral with said drive shaft (11), both said levers being actuated by said actuating means (13), and an elastic link (21), interposed between said first and second levers in such a way that said levers can rotate by different angles when actuated by said actuating means (13). Thanks to the interaction between said levers (17, 19; 17, 19') and said elastic link (21) it is possible to couple the first gear (1) to the second gear, even when said gears are not aligned with each other and the teeth of said gears interfere with each other, simply by actuating the rotation of at least one of said gears.

## Description

### Technical Field of the Invention

The present invention relates to an engagement device for mechanical gearbox that allows meshing between gears.

By way of example, the present invention can be used in a mechanical gearbox of a vehicle to vary the gear ratio.

In particular, this invention can be used in self-propelled machinery employed in the agricultural and gardening sectors.

### Prior Art

In the agricultural and gardening sectors, self-propelled machinery is used, including small two- or four-wheeled tractors, rotary hoes, rotary tillers, mulchers, motorised tracked wheelbarrows, walking tractors and climbers.

These machines are generally fitted with an internal combustion engine, running at full throttle, which, as well as propelling the machine forward, transmits a certain amount of power to an implement (tiller, blade, flail, etc.) that carries out the agricultural or gardening task.

The forward speed of the machine is inversely proportional to the amount of work that the implement has to perform: in the case of tall, tough grass, heavy soil or large-diameter shrubs, the forward speed is reduced to prioritise the power transmitted to the implement.

Therefore, whilst maintaining the engine speed at its maximum, the same machine must be able to operate at different forward speeds.

A mechanical gearbox is often used to achieve this result.

This mechanical gearbox comprises, in a known manner, a number of gears that are mounted to two parallel rotating shafts and can be meshed with each other in a detachable manner.

Depending on the number of teeth on the gears being meshed, different gear ratios are produced, each corresponding to a different forward speed.

An engagement device is used to mesh the gears in a detachable manner.

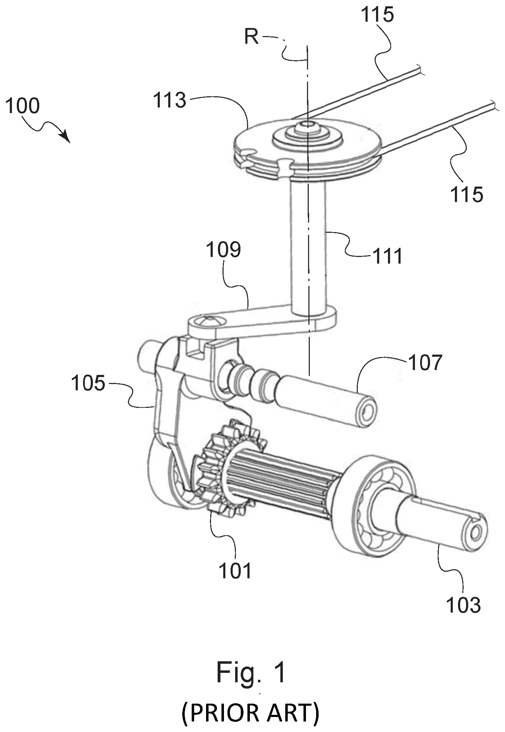

An engagement device of known type is shown in Figure 1.

As can be seen in this figure, the engagement device, indicated by reference numeral 100, is designed so that at least one first gear 101 slides along a first splined shaft 103 until it engages a second gear selected from a plurality of second gears (not shown) in such a way that the teeth of the first gear can mesh frontally with the teeth of the second gear that has been selected.

To make the first gear 101 slide along the first shaft 103, said gear is associated with a fork 105, which in turn is arranged to slide along a slide shaft 107, parallel to the first shaft 103.

The sliding of the fork 105 is controlled by a bracket 109.

Said bracket 109, designed to rotate around a rotation axis R, orthogonal to the first shaft 103, has a distal end engaging with said fork 105, and a proximal end, opposite said distal end and connected to a drive shaft 111, which drives the rotation of said bracket 109 around the rotation axis R.

As shown in Figure 1, said drive shaft 111 receives rotational motion from a pulley 113, which is integral with the drive shaft 111. Said pulley 113 rotates as a result of the reciprocating motion of two cables 115, which in turn are connected to a second pulley driven by an actuating lever (both not shown).

In an alternative configuration, the drive shaft 111 receives rotation motion directly from the actuating lever, which is welded or screw directly to said drive shaft 111.

In both cases, the actuating lever, controlled by the operator, can be positioned in slots corresponding to the desired gear, i.e., to the desired gear ratio, to achieve the corresponding change in speed.

For reasons of space and cost, the engagement devices used in these self-propelled machines are often not fitted with synchronisers; therefore, in order to change the gear ratio without damaging the gear teeth, it is essential to stop the rotation of the gears and then, whilst the gears are stationary, operate the actuating lever to select the desired gear.

Very often, when the rotation of the gears is interrupted, the gears may be in a position that prevents the teeth of the first gear from meshing frontally with the grooves of the second gear; instead, the teeth of the first gear may interfere with the teeth of the second gear, preventing the gears from engaging and thus preventing gear selection.

In this case, the operator must briefly restart the rotation of the gears, in the hope that, once the rotation has been stopped again, the gears will come to rest in a position more conducive to engagement; the operator must then operate the actuating lever to attempt to engage the selected gear.

This inevitably results in a longer time taken to adjust the travel speed of the self-propelled machine and a consequent reduction in the operational time of the machine.

The main object of the invention is to overcome or at least mitigate, the above-mentioned drawbacks by providing an engagement device for mechanical gearbox that allows gears to mesh even when their teeth are aligned frontally.

Another object of the present invention is to provide an engagement device for mechanical gearbox that enables the above-mentioned results to be achieved in a simple and cost-effective manner.

These and other objects are achieved with an engagement device for mechanical gearbox as claimed in the appended claims.

### Summary of the Invention

The engagement device according to the invention comprises, in a manner known per se, an actuating means, suitable to drive the rotation of a drive shaft around a rotation axis, the rotation of said drive shaft causing the translation of at least one first gear, along the rotation axis of said first gear, towards at least one second gear.

Said actuating means is designed to be controlled, directly or indirectly, by an operator.

Said first gear and said second gear may be in a state of rest, in which the rotation of said gears is halted, or in a state of motion, in which one of said gears is rotating.

According to the invention, said engagement device further comprises:
- a first lever, operationally associated with said actuating means and capable of rotating around said rotation axis independently of the drive shaft;
- a second lever, integral with the drive shaft and operationally associated, together therewith, with said actuating means and capable of rotating, together with said drive shaft, around said rotation axis;
- an elastic link, interposed between said first lever and said second lever in such a way that said levers can rotate around said rotation axis by different angles with respect to each other when actuated by said actuating means.

Preferably, said elastic link is a spring.

More preferably, said elastic link is a torsion spring.

When the first and second gears are in the state of rest and an operator acts onto the actuating means, said actuating means drives the rotation of the first lever and second lever by an amount corresponding to the translational stroke that would cause said at least one first gear to mesh with said at least one second gear.

The first lever, which is free to rotate relative to the drive shaft, completes the full rotation driven by the drive mechanism.

At the same time, the second lever and the drive shaft also rotate, thereby causing said at least one first gear to move towards said at least one second gear.

If the first gear is correctly aligned with the corresponding second gear, the second lever and the drive shaft also complete the full rotation driven by the actuating means, the second lever thereby becoming aligned with the first lever.

However, if, when the first gear reaches the corresponding second gear, the teeth of the first gear do not mesh with the grooves of the second gear, they will collide with the teeth of the second gear.

In this case, the translational stroke of the first gear is interrupted due to interference between the teeth of the gears, this resulting in a shorter stroke than that required to achieve meshing.

Therefore, when the teeth of the first gear interfere with the teeth of the corresponding second gear, the rotation of the second lever is less than that of the first lever.

This difference in rotation brings the elastic link, interposed between the first and second levers, into a state of deformation (compression/expansion/torsion), which persists for as long as the gear teeth interfere between each other.

As the gears transition from a state of rest to a state of motion, due to the change in angular position caused by the rotation of said gears, the teeth of the first gear come to face the grooves of the second gear.

Consequently, the interference between the teeth of the gears, which interference maintained the elastic link in the deformed state, ceases, and the elastic restoring force of the elastic link causes the second lever to rotate towards the first lever, until the second lever is brought into alignment with said first lever.

Further rotation of the second lever causes a corresponding rotation of the drive shaft, thereby enabling the drive shaft to complete the translational stroke of the first gear so as to bring said first gear into mesh with the respective second gear.

Therefore, the engagement device of the present invention allows gears to be meshed with each other, even when they are not perfectly aligned and their teeth interfere with one another, simply by setting the gears in motion.

However, it is possible that, due to play and/or factors of positional uncertainty, the actuating means may not precisely drive the rotation of the first lever and, consequently, of the second lever.

The second lever, in turn, does not cause precise translation of the first gear, i.e., it does not cause the first gear to translate in such a way as to allow it to reach the second gear.

To overcome this problem, according to a preferred embodiment of the present invention, said second lever comprises a shaped portion capable of interacting with a slider.

Preferably, said shaped portion is an undulating shaped portion consisting of an alternation of ridges and grooves, wherein at least one of said grooves is designed to accommodate a portion of the slider.

Alternatively, said shaped portion comprises at least one hole designed to accommodate a portion of the slider.

Depending on the angular position of the second lever, which is determined by the rotation of the second lever around the rotation axis, said slider and said shaped portion may be in a coupled configuration, in which said slider portion is inserted in the groove/hole, or in a decoupled configuration, in which said slider portion is disengaged from the groove/hole.

Said groove/hole is located on the shaped portion in such a way that the angular position of the second lever at which the slider and the shaped portion are in the coupled configuration also corresponds to the angular position of the second lever at which the first gear can mesh with the second gear.

In addition, said slider and said shaped portion are shaped in such a way that, in the event of the second lever being rotated incorrectly, i.e., when the slider and the shaped portion are in the decoupled configuration, the interaction between the slider and the shaped portion causes an additional rotation of the second lever such as to bring the portion of said slider into the groove/hole, i.e., into the coupled configuration.

Such additional rotation of the second lever causes an additional translation of the first gear, which brings said first gear into the position of meshing with the second gear, thereby making it possible to correct any inaccurate command from the actuating means. In other words, the interaction between said shaped portion and said slider makes it possible to achieve precise adjustment of the rotation of the second lever - and therefore of the translational stroke of the first gear - in order to position the first gear at the respective second gear in a precise manner.

According to a further aspect of the present invention, a mechanical gearbox is provided comprising:
- a first shaft along which said first gear can translate;
- a second shaft, arranged parallel to said first shaft;
- a plurality of second gears arranged in succession on said second shaft;
wherein said actuating means can selectively drive the translation of said first gear along said first shaft in order to move said first gear towards any of said second gears, and wherein said engagement device enables said at least one first gear to mesh with one of said second gears.

In this case, too, the second lever of the engagement device preferably comprises a shaped portion capable of interacting with a slider.

In this case, said shaped portion comprises a succession of grooves or a succession of holes.

Similarly to what has been described above, depending on the angular position of said second lever, said slider and said shaped portion may be in a coupled configuration, in which said slider portion is inserted in any of said grooves/holes, or in a decoupled configuration, in which said slider portion is disengaged from said grooves/holes.

Said grooves/holes are located on the shaped portion in such a way that an angular position of the second lever is associated with each of said grooves/holes, at which angular position the first gear can engage with a corresponding second gear.

Thus, a meshing between the first gear and one of said second gears is associated with each of said grooves/holes.

Similarly to what has been described above, said slider and said shaped portion are shaped in such a way that, in the event of the second lever being rotated incorrectly, i.e., when the slider and the shaped portion are in the decoupled configuration, the interaction between the slider and the shaped portion causes an additional rotation of the second lever such as to bring the portion of said slider into the closest groove/hole, i.e., into the coupled configuration.

This causes an additional translation of the first gear along the first shaft, thereby bringing said first gear into the position of meshing with the second gear that has been selected.

### Brief Description of the Drawings

Further features and advantages of the present invention will become more evident from the following detailed description of some preferred embodiments of the invention, given by way of non-limiting examples, with reference to the annexed drawings, in which:
- Figure 1 shows an engagement device for mechanical gearbox of known type;
- Figure 2 shows an engagement device for mechanical gearbox according to a first embodiment of the present invention;
- Figure 3 shows an engagement device for mechanical gearbox according to a second embodiment of the present invention, in which the second lever of the engagement device comprises a shaped portion capable of interacting with a slider;
- Figure 4 shows a cross-section of a detail of the engagement device of Figure 3;
- Figure 5 shows an alternative embodiment of the slider of Figure 3;
- Figure 6 shows a further alternative embodiment of the slider of Figure 3;
- Figure 7 shows a further alternative embodiment of the slider and shaped portion of Figure 3.

### Detailed Description of Some Preferred Embodiments of the Invention

In the following description of a preferred embodiment of an engagement device, reference will be made to an engagement device used to mesh two gears of a mechanical gearbox in order to vary the gear ratios within a vehicle for agricultural use, obtaining a variation in the forward speed of said vehicle.

However, said embodiment should not be interpreted in a restrictive manner and the engagement device according to the invention could be used to obtain meshing of gears in any mechanical systems that require engagement and disengagement of two mechanical elements.

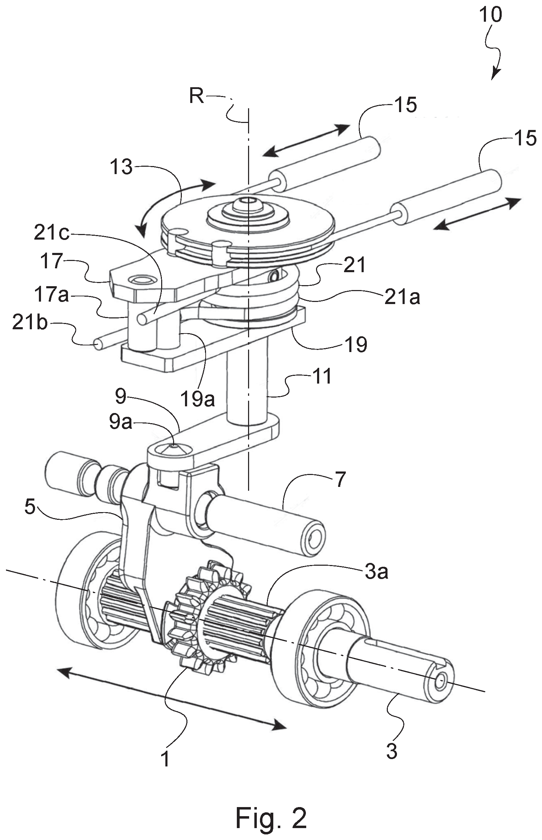

According to a first embodiment, shown in Figure 2, the engagement device according to the invention, indicated by reference numeral 10, comprises a first gear 1, capable of sliding axially along a first shaft 3 to which it is constrained by means of a series of grooves 3a.

Through this sliding motion, said first gear 1 can engage a second gear (not shown) of the mechanical gearbox selected from a plurality of second gears, which are arranged in succession on a second shaft (not shown) parallel to said first shaft 3.

Said first gear 1 is associated with a fork 5, which controls the sliding of said first gear 1. Said fork 5 is arranged to slide axially along a slide shaft 7, parallel to said first shaft 3, by means of a bracket 9.

Said bracket 9 has a distal end engaging with said fork 5 by means of a rotary joint 9a, and a proximal end, opposite said distal end and connected to a drive shaft 11 that drives the rotation of said bracket 9 around a rotation axis R orthogonal to the first shaft 3.

The rotation of said drive shaft 11 is generated by a first pulley 13, which rotates as a result of the reciprocating motion of two cables 15.

Said two cables 15, in turn, are connected to a second pulley (not shown), the rotation of which is driven by an actuating lever (not shown), designed to be operated by an operator. In a manner known per se, said actuating lever can be moved following the path defined by slots formed on the console of the vehicle. Each movement of the actuating lever in a specific slot, to which a relative gear corresponds, causes the first gear to move in a corresponding manner towards a specific second gear, thereby producing the desired gear ratio.

Generally, this type of manual gearbox can have between one and three forward gears and one reverse gear.

The engagement device 10 according to the invention further comprises a first lever 17, integral with the first pulley 13 and designed to rotate, together with said first pulley 13, around the rotation axis R, the rotation of said first lever 17 being independent of the rotation of the drive shaft 11.

The engagement device 10 further comprises a second lever 19, integral with the drive shaft 11 and designed to rotate, together with said drive shaft 11, around the rotation axis R.

A torsion spring 21 is interposed between said first lever 17 and said second lever 19, said torsion spring acting as an elastic link between said elements, allowing said first lever 17 and said second lever 19 to partially rotate relative to each other around the rotation axis R.

In more detail, both said first lever 17 and said second lever 19 are shaped so as to radially protrude from the rotation axis R, the first lever 17 has a first pin 17a facing the second lever and the second lever 19 has a second pin 19a facing the first lever.

The first pin 17a and the second pin 19a are preferably parallel to the rotation axis R.

The spring 21 comprises a winding portion 21a, coaxial to the rotation axis R and provided with a first end 21b and a second end 21c, which ends extend in the radial direction relative to the rotation axis R.

Said first end 21b is in contact with said first pin 17a, whereas said second end 21c is in contact with said second pin 19a in such a way that a relative rotation between the first lever 17 and the second lever 19 causes said first end 21b and said second end 21c to move away from each other and consequently determines a twisting of the winding portion 21a.

Starting from a condition in which the rotation of said first gear 1 and said plurality of second gears is prevented, when the operator moves the actuating lever in order to mesh said first gear 1 with one of said second gears, said actuating lever drives, through the pulleys and the two cables 15, the rotation of the first lever 17.

In an alternative embodiment, said actuating lever may be directly connected (for example, by welding or screwing) to said first lever 17, without the need to insert the two pulleys and the cables.

Regardless of the embodiment, said first lever 17, not being constrained to the drive shaft 11, rotates by an amount corresponding to the translational stroke that would cause the first gear 1 to mesh with the second gear that has been selected.

At the same time, the actuating lever, through the pulleys and the two cables 15, drives the rotation of the drive shaft 11, also bringing about a rotation of the second lever 19 associated therewith.

Alternatively, said actuating lever could directly control the rotation not only the rotation of said first lever 17, but also the rotation of said drive shaft 11, without the need to interpose the two pulleys and the cables.

Regardless of the embodiment, the rotation of the drive shaft 11 causes the translation of the fork 5 and the first gear 1 along the first shaft 3 towards the second gear.

However, when said first gear 1 reach the second gear, the teeth of the first gear may not match with the grooves in the second gear and therefore may collide with the teeth of the second gear.

In this case, the translational stroke of the first gear 1 and the fork 5 along the first shaft 3 is stopped by the interference between the teeth of the two gears.

Therefore, the translational stroke of the first gear 1 is shorter than the stroke necessary to achieve meshing of the gears.

As the translational stroke of the first gear 1 is directly associated with the rotation of the drive shaft 11 and the second lever 19, when the teeth of the first gear 1 interfere with the teeth of the second gear, the rotation of the second lever 19 is smaller than the rotation of the first lever 17.

Such difference in rotation between the first and the second levers causes the first pin 17a and the second pin 19a to move away from each other, thus causing the first end 21b and the second end 21c of the torsion spring 21 to move away from each other and consequently causing a twisting of the winding portion 21a.

This torsion is maintained as long as the teeth of the two gears mesh with each other. When the first gear and/or the second gear are set in motion, the resulting change in angular position causes the teeth of the first gear 1 to match with the grooves of the second gear, thereby eliminating the interference between the teeth of the two gears.

The absence of interference releases the winding portion 21a of the torsion spring 21, wherein the elastic restoring force of the spring, by bringing the first and second ends 21b and 21c closer to each other, also causes the first pin 17a and the second pin 19a to move closer together, causing the second lever 19 to rotate towards the first lever 17.

The difference in rotation between the second lever 19 and the first lever 17 is therefore annulled.

This additional rotation of the second lever 19 causes a corresponding rotation of the drive shaft 11, thereby allowing the fork 5 and the first gear 1 to complete their translational stroke, thereby obtaining meshing between the first gear 1 and the second gear.

It is clear that the first lever 17, the second lever 19 and the spring 21 could be configured in numerous ways such to allow, in the event of interference between the teeth of the gears, the spring to be brought into a deformed state such that the second lever can be rotated toward the first lever when said gears are set in motion.

It is also possible that, if the lengths of the two cables 15 are not accurately adjusted and/or if other factors of positional uncertainty arise, the actuating lever may not precisely drive the rotation of the first lever 17 and, consequently, of the second lever 19.

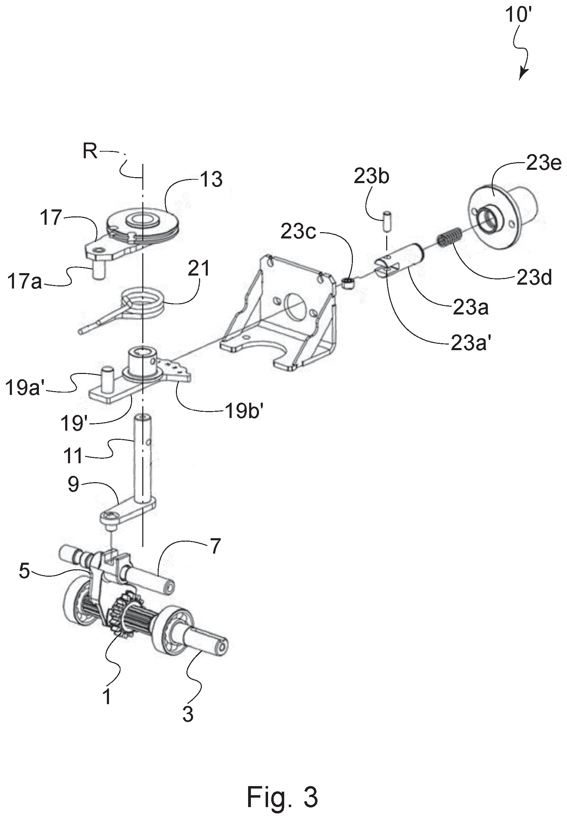

The second lever 19, in turn, may not drive a precise translation of the first gear 1, i.e. a translation such as to allow the first gear 1 to reach the second gear selected. Figure 3 illustrates a second embodiment of the engagement device, indicated by reference numeral 10', aimed at overcoming this further problem.

The structure and operation of most of the components of the engagement device 10' are essentially identical to those described above with reference to the first embodiment and will therefore not be described in detail again.

The second embodiment differs from the first embodiment in that the second lever 19' of the engagement device 10' comprises, at a proximal end opposite the distal end carrying the second pin 19a' arranged to interact with the spring 21, a shaped portion 19b'.

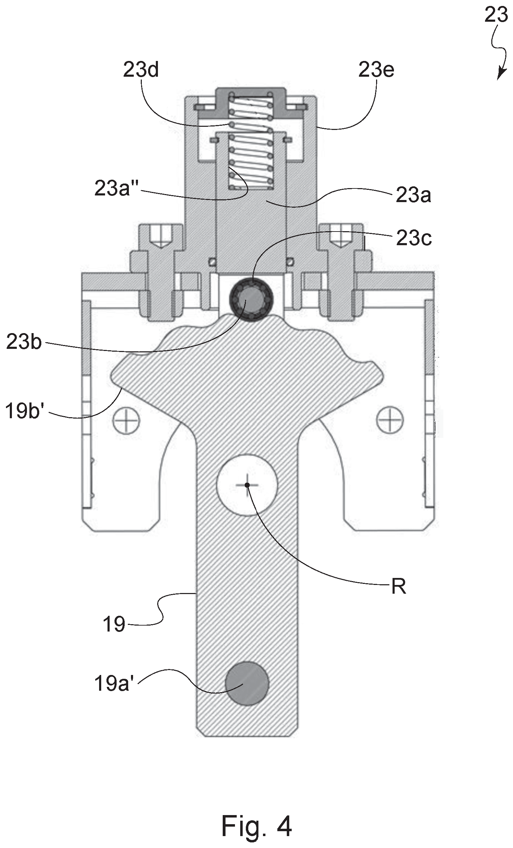

As can be better seen in Figure 4, said shaped portion 19b' is configured as a fan-shaped portion perpendicular to the rotation axis R and extending radially with respect to said rotation axis R.

Said shaped portion 19b' has an undulating profile consisting of a regular alternation of ridges and grooves.

In said second embodiment, the engagement device 10' further comprises a slider 23, capable of interacting with said shaped portion 19b'.

Said slider 23 comprises a cylinder 23a orthogonal to the rotation axis R.

Said cylinder 23a is provided, at a first face thereof, facing the shaped portion 19b', with a first groove 23a' which accommodates a peg 23b coupled to a bearing 23c, both said peg and said bearing being parallel to the rotation axis R, said bearing 23c being capable of interacting with the undulating profile of the shaped portion 19b'.

At a second face, opposite said first face, said cylinder 23a comprises a second groove 23a", within which a second spring 23d coaxial to said cylinder 23a is inserted.

Said spring 23d pushes said cylinder 23a against the shaped portion 19b', pressing the bearing 23c into the grooves in said shaped portion 19b'.

For example, the cylinder 23a may be received in a seat 23e and the spring 23d may use a wall of the seat 23e as a stop to push the cylinder 23a against the shaped portion 19b' of the second lever 19'.

Depending on the angular position of said second lever 19', which is determined by the rotation of said second lever 19' around the rotation axis R, said slider 23 and said shaped portion 19b' may be in a coupled configuration, in which the bearing 23c is inserted in any of the grooves in the shaped portion 19b', or in a decoupled configuration, in which said bearing 23c is disengaged from said grooves.

Sadi grooves are located on the shaped portion 19b' in such a way that an angular position of the second lever 19' is associated with each of said grooves, at which angular position the first gear 1 can engage with a corresponding second gear.

Thus, a meshing between the first gear 1 and one of said second gears is associated with each of the grooves in the shaped portion 19b'.

As can be seen in Figure 4, said slider 23 and said shaped portion 19b' are shaped in such a way that, in the event of the second lever 19' being rotated incorrectly, i.e., when the slider 23 and said shaped portion 19b' are in the decoupled configuration, the interaction between the slider 23 and the shaped portion 19' causes an additional rotation of the second lever 19' such as to bring the bearing 23c into the closest groove, i.e., into the coupled configuration.

Such additional rotation of the second lever 19' causes an additional translation of the first gear 1, which brings said first gear 1 into the position of meshing with the second gear selected, thereby making it possible to correct any inaccurate command from the actuating lever.

Thus, the interaction between said bearing 23c and the undulating profile of the shaped portion 19b' makes it possible to achieve precise adjustment of the rotation of the second lever 19' - and therefore of the translational stroke of the first gear 1 - in order to position said first gear 1 at the respective selected second gear in a precise manner, even when the lengths of the two cables 15, which drive the rotation of the second lever 19', are not accurately adjusted and/or if other factors of positional uncertainty arise.

Therefore, in this second embodiment, said shaped portion 19b' allows using said second lever 19' as a preselector.

It will be evident that, in an alternative embodiment, the shaped portion 19b' and the slider 23 could be manufactured in a variety of configurations such as to allow interaction between said slider and the profile of said shaped portion in order to ensure the correct positioning of the first gear.

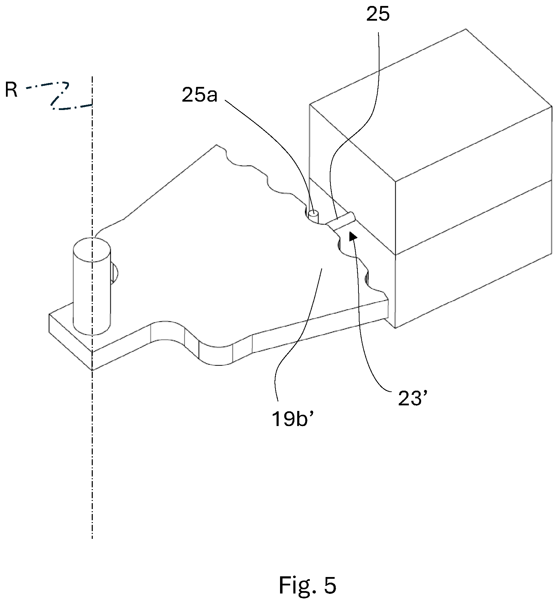

For example, in a first alternative embodiment, shown in Figure 5, the slider, indicated by reference numeral 23', is made in the form of an 'L'-shaped rod.

Said rod 25 comprises a portion 25a which is parallel to the rotation axis R.

The rod 25 is arranged in such a way that, in the coupled configuration, the portion 25a of said rod 25 is engaged in the grooves in the shaped portion 19b', which is essentially identical to the shaped portion described above.

In this case, too, the interaction between said rod 25 and the undulating profile of the shaped portion 19b' allows adjusting the rotation of the second lever 19'.

At the same time, the 'L'-like shape and the elastic deformation capacity of the rod 25 allow the second lever 19' to rotate around the rotation axis R.

The slider 23' might also comprise a spring (not shown) capable of pushing the portion 25a of the rod 25 into the grooves in the shaped portion 19b', similarly to the embodiment illustrated in Figures 3 and 4.

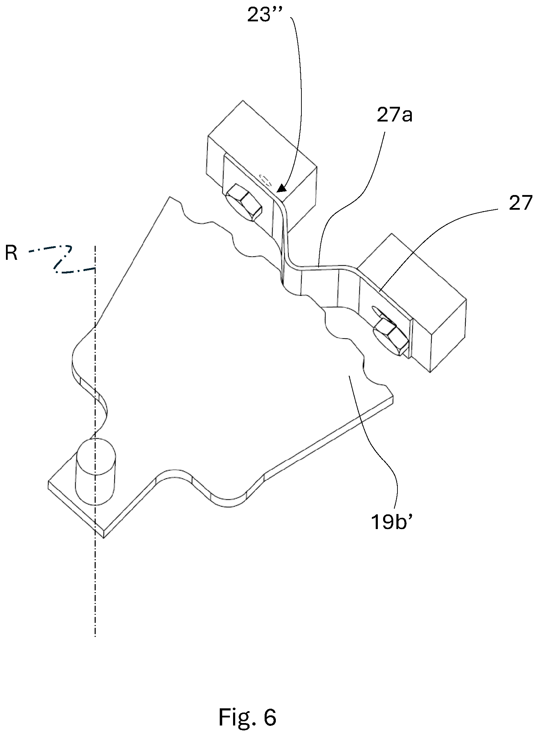

In a second alternative embodiment, shown in Figure 6, the slider, indicated by reference numeral 23", is made in the form of a plate 27 provided with a protruding portion 27a facing said shaped portion 19b' and designed to engage with any of the grooves in said shaped portion 19b'.

In this case too, the shaped portion 19b' is essentially identical to the shaped portion of the embodiments described above.

In this case, too, the interaction between the protruding portion 27a and the undulating profile of the shaped portion 19b' allows adjusting the rotation of the second lever 19'.

At the same time, the elastic deformation capacity of said plate 27 allows the second lever 19' to rotate around the rotation axis R.

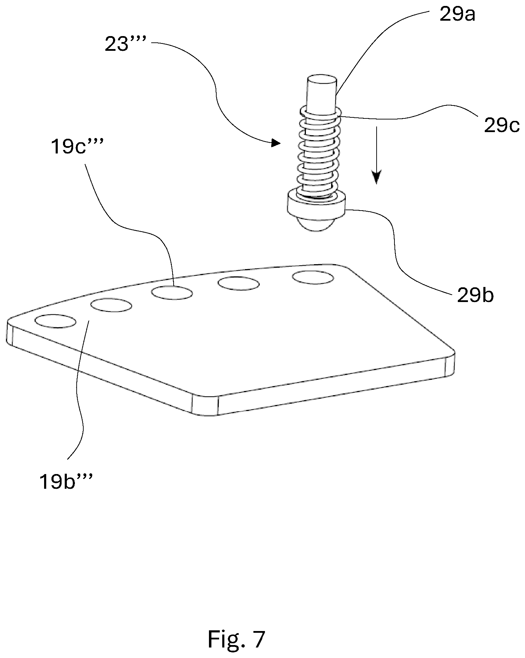

In a third alternative embodiment, shown in Figure 7, the shaped portion, indicated by reference numeral 19b‴, has, instead of the alternation of ridges and grooves, a succession of holes 19c‴ suitable for receiving a corresponding slider, indicated by reference numeral 23‴.

An angular position of the second lever 19' is associated with each hole 19c"', at which angular position the first gear 1 can engage with a corresponding second gear.

In this embodiment, the slider 23‴ is parallel to the rotation axis R and is designed to slide parallel to said axis.

Said slider 23‴ comprises a pin 29a having an end portion 29b facing the holes 19c‴ of the shaped portion 19b‴.

A spring 29c is designed to push said end portion 29b towards the shaped portion 19b‴ until said end portion is inserted into any of said holes 19c‴ of the shaped portion 19b‴. Similarly to the embodiments described above, in the event of the second lever 19' being rotated incorrectly, the interaction between the slider 23‴ and the shaped portion 19b' causes an additional rotation of the second lever 19b' such as to bring the end portion 29b into the closest hole 19c"', thereby allowing adjusting the rotation of said second lever 19'.

It will also be apparent to the person skilled in the art that the embodiments described above should in no way be intended in a limiting sense ant that numerous variations and modifications are possible without thereby departing from the scope of the invention as defined in the appended claims.

In particular, the engagement device according to the invention could be used in a mechanical system to enable any type of meshing of teeth (either radial or front teeth), even between gears mounted on coaxial shafts.

## Claims

1. Engagement device for mechanical gearbox (10; 10') comprising an actuating means, suitable to drive the rotation of a drive shaft (11) around a rotation axis (R), the rotation of said drive shaft (11) causing the translation of at least one first gear (1) along a first shaft (3), parallel to the rotation axis of said at least one first gear, towards at least one second gear,
**characterized in that** said engagement device comprises:
- a first lever (17), operationally associated with said actuating means (13) and capable of rotating around said rotation axis (R) independently of said drive shaft (11);
- a second lever (19; 19'), integral with said drive shaft (11) and operationally associated, together therewith, with said actuating means (13) and capable of rotating, together with said drive shaft (11), around said rotation axis (R);
- an elastic link (21), interposed between said first lever (17) and said second lever (19; 19') in such a way that said first lever (17) and said second lever (19; 19') can rotate around said rotation axis (R) by different angles with respect to each other when actuated by said actuating means (13).

2. Engagement device (10; 10') according to claim 1, wherein:
- said elastic link (21) is a torsion spring;
- said first lever (17) and said second lever (19; 19') are shaped in such a way as to protrude radially from said rotation axis (R);
- said first lever (17) has a first pin (17a) facing said second lever, and said second lever (19; 19') has a second pin (19a) facing said first lever;
- said torsion spring (21) comprises a winding portion (21a), coaxial to said rotation axis (R), said winding portion (21a) being provided with a first end (21b) and a second end (21c) which extend in a radial direction with respect to said rotation axis (R);
and wherein said first end (21b) is in contact with said first pin (17a) and said second end (21c) is in contact with said second pin (19; 19a'), a relative rotation between said first lever (17) and said second lever (19; 19') resulting in a displacement of said first end (21b) and said second end (21c) relative to each other and a consequent twisting of said winding portion (21a).

3. Engagement device (10; 10') according to claim 1 or 2, wherein said actuating means is made in the form of an actuating lever directly connected to said first lever (17), or in the form of a first pulley (13), integral with said first lever (17), wherein said first pulley (13) rotates due to the reciprocating motion of two cables (15).

4. Engagement device (10') according to any of the preceding claims, wherein said second lever (19') comprises a shaped portion (19b') capable of interacting with a slider (23).

5. Engagement device (10') according to claim 4, wherein said shaped portion (19b'; 19b‴) is an undulating shaped portion consisting of an alternation of ridges and grooves, wherein at least one of said grooves is designed to accommodate a portion of said slider (23; 23'; 23"; 23"'), or said shaped portion (19b'; 19b"') comprises at least one hole (19c‴) designed to accommodate a portion of said slider (23; 23'; 23"; 23‴).

6. Engagement device (10') according to claim 5, wherein, depending on the angular position of said second lever (19'), which is determined by the rotation of said second lever (19') around the rotation axis (R), said slider (23; 23'; 23"; 23‴) and said shaped portion (19b'; 19b‴) may be in a coupled configuration, in which said slider portion is inserted in said groove/hole, or in a decoupled configuration, in which said slider portion is disengaged from said groove/hole;
wherein said groove/hole is located on said shaped portion (19b'; 19b‴) in such a way that the angular position of said second lever (19') at which the slider (23; 23'; 23"; 23"') and the shaped portion (19b'; 19b‴) are in the coupled configuration also corresponds to the angular position of the second lever (19') at which said first gear (1) meshes with said at least one second gear;
and wherein said slider (23; 23'; 23"; 23‴) and said shaped portion (19b'; 19b‴) are shaped in such a way that, when said slider (23; 23'; 23"; 23‴) and said shaped portion (19b'; 19b‴) are in the decoupled configuration, the interaction between the slider (23; 23'; 23"; 23‴) and said shaped portion (19b'; 19b‴) causes the second lever (19') to rotate so as to bring said slider (23; 23'; 23"; 23"') and said shaped portion (19b'; 19b‴) into the coupled configuration.

7. Engagement device (10') according to claim 5 or 6, wherein said shaped portion (19b') is configured as a fan-shaped portion which is perpendicular to said rotation axis (R) and extends radially with respect to said rotation axis (R), and wherein said shaped portion (19b') has an undulating profile consisting of a regular alternation of ridges and grooves, and wherein said slider (23) comprises a cylinder (23a) orthogonal to said rotation axis (R) and provided, at a first face facing said shaped portion (19b'), with a first groove (23a') which accommodates a peg (23b) coupled to a bearing (23c), both said peg and said bearing being parallel to said rotation axis (R), said bearing (23c) being capable of interacting with the profile of said shaped portion (19b').

8. Engagement device (10') according to claim 7, wherein said cylinder (23a) is further provided, at a second face opposite said first face, with a second groove (23a''), within which a spring (23d) coaxial to said cylinder (23a) is inserted;
wherein said spring (23d) pushes said cylinder (23a) against said shaped portion (19b'), pressing said bearing (23c) into the grooves in said shaped portion (19b').

9. Engagement device (10') according to claim 5 or 6, wherein said slider (23') is made in the form of an 'L'-shaped rod (25) comprising a portion (25a) that is parallel to the rotation axis (R) and designed to engage with any of the grooves in said shaped portion (19b').

10. Engagement device (10') according to claim 5 or 6, wherein said slider (23") is made in the form of a plate (27) provided with a protruding portion (27a) facing said shaped portion (19b') and designed to engage with any of the grooves in said shaped portion (19b').

11. Engagement device (10') according to claim 5 or 6, wherein said shaped portion (19b‴) comprises a succession of holes (19c‴).

12. Engagement device (10') according to claim 11, wherein said slider (23‴) is parallel to the rotation axis (R) and designed to slide parallelly to said rotation axis (R), wherein said slider (23‴) comprises a pin (29a) provided with an end portion (29b) facing the holes (19c‴) in the shaped portion (19b"'), and wherein said slider (23‴) further comprises a spring (29c) designed to push said end portion (29b) towards said shaped portion (19b‴) until said end portion is inserted into any of said holes (19c‴).

13. Mechanical gearbox comprising an engagement device (10; 10') according to any of claims 1 - 12.

14. Mechanical gearbox according to claim 13, comprising a second shaft, arranged parallel to said first shaft, and a plurality of second gears arranged in succession on said second shaft, said engagement device (10; 10') enabling said at least one first gear (1) to mesh with one of said second gears.

15. Mechanical gearbox according to claim 14, wherein said shaped portion (19b'; 19b‴) comprises a succession of grooves or a succession of holes;
wherein, depending on the angular position of said second lever (19'), which is determined by the rotation of said second lever (19') around the rotation axis (R), said slider (23; 23'; 23"; 23‴) and said shaped portion (19b'; 19b‴) may be in a coupled configuration, in which said slider portion is inserted in any of said grooves/holes, or in a decoupled configuration, in which said slider portion is disengaged from said grooves/holes;
wherein said grooves/holes are located on said shaped portion (19b'; 19b‴) in such a way that an angular position of the second lever (19') is associated with each of said grooves/holes, at which angular position the first gear (1) engages with one of said second gears, one of said grooves/holes corresponding to each of said second gears;
wherein said slider (23; 23'; 23"; 23‴) and said shaped portion (19b'; 19b‴) are shaped in such a way that, when said slider (23; 23'; 23"; 23‴) and said shaped portion (19b'; 19b‴) are in the decoupled configuration, the interaction between said slider (23; 23'; 23"; 23‴) and said shaped portion (19b'; 19b‴) causes an additional rotation of the second lever (19'), such as to bring the portion of said slider into the coupled configuration with the groove/hole closest to the slider (23; 23'; 23"; 23‴).
